# DEMANDE DE BREVET EUROPEEN

(11) **EP 3 503 430 A1**
(43) Date de publication de la demande: **26.06.2019**
(21) Numéro de dépôt: 18214322.2
(22) Date de dépôt: 20.12.2018
(51) Int. Cl.: H04B 7/204

(54) **PROCEDE DE COUVERTURE MULTIFAISCEAUX PAR REGROUPEMENT DE FAISCEAUX ELEMENTAIRES DE COULEURS DIFFERENTES, ET CHARGE UTILE DE TELECOMMUNICATIONS POUR METTRE EN OEUVRE UN TEL PROCEDE**

(30) Priorité: 21.12.2017 FR 1701344
(71) Demandeur: Thales, 92400 Courbevoie (FR)
(72) Inventeur: BOSSHARD, Pierre, 31037 TOULOUSE CEDEX 1 (FR); LE BOULC'H, Didier, 31037 TOULOUSE CEDEX 1 (FR)
(74) Mandataire: Priori, Enrico

(57) **Abrégé**

**Procédé de couverture multifaisceaux d'une région de la surface terrestre** comportant :
- la génération, par une charge utile de télécommunications embarquée sur un satellite, d'une pluralité de faisceaux à radiofréquence, dits faisceaux élémentaires (FE1, FE2, FE3) ;
- la formation d'une pluralité de faisceaux à radiofréquence, dits composites (FC"), présentant des empreintes au sol de tailles différentes, chaque dit faisceau composite étant obtenu par regroupement d'un ou plusieurs faisceaux élémentaires ; et
- l'émission ou la réception de données à travers lesdits faisceaux composites, des données identiques étant émises ou reçues à travers tous les faisceaux élémentaires formant un même faisceau composite.

## Description

L'invention relève du domaine des télécommunications par satellite. Plus particulièrement, elle porte sur un procédé pour réaliser une couverture multifaisceaux d'une région de la surface terrestre, ainsi que sur une charge utile de télécommunications, destinée à être embarquée sur un satellite, permettant la mise en oeuvre d'un tel procédé.

La recherche de capacités de transmission élevées dans les systèmes de communication par satellite impose le recours à des antennes à faisceaux pour réaliser des couvertures dites « multifaisceaux » d'une région d'intérêt de la surface terrestre. Une telle couverture se présente sous la forme d'une juxtaposition de couvertures individuelles géographiquement distinctes, contiguës ou non contigües, généralement de forme circulaire ou elliptique et correspondant aux empreintes au sol de différents faisceaux générés par un satellite de télécommunication. Il convient de noter que le terme « faisceau » peut recouvrir deux réalités distinctes : lorsqu'on considère une liaison descendante, il est effectivement question de faisceaux de rayonnement électromagnétique se propageant du satellite vers le sol ; dans le cas d'une liaison ascendante, par contre, on indique par « faisceau » un lobe du diagramme de réception du système antennaire du satellite.

Les couvertures multifaisceaux permettent généralement la réutilisation de la fréquence selon un schéma dit « à N couleurs ». Selon un tel schéma, afin d'éviter les interférences, deux faisceaux adjacents présentent une « couleur » différente, chaque « couleur » correspondant à une paire fréquence - état de polarisation.

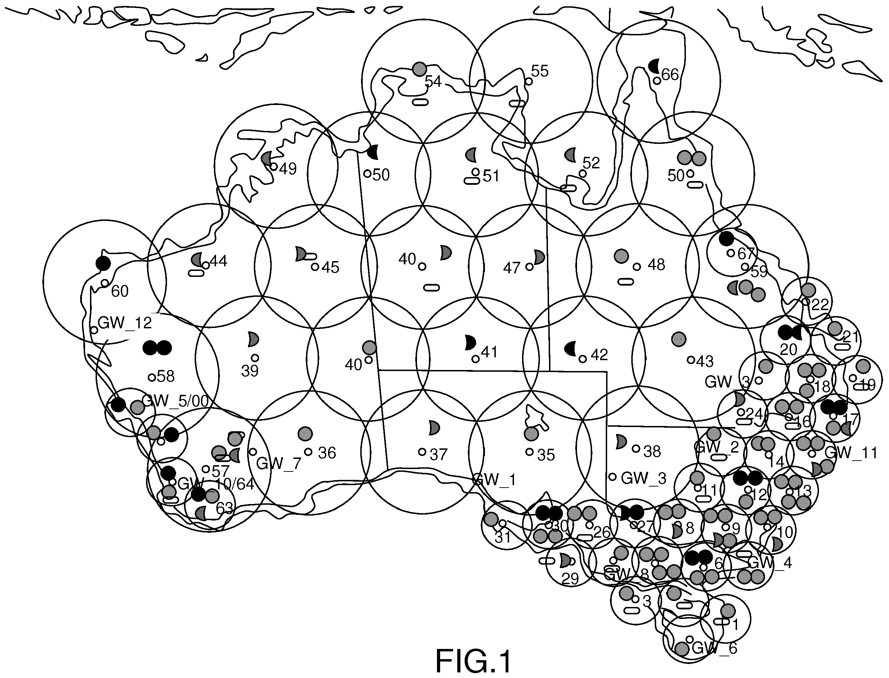

La disparité des besoins en trafic de données entre différentes parties de la région d'intérêt peut être très importante ; il est donc nécessaire de faire varier la taille des faisceaux desservant ces différentes parties. Ainsi, il est usuel d'utiliser des faisceaux fins d'ouverture angulaire minimale dans les zones a forte densité d'utilisateurs, et des faisceaux larges d'ouverture angulaire importante dans les zones a faible densité d'utilisateurs. A titre d'exemple, la figure 1 montre une couverture multifaisceaux de l'Australie présentant des faisceaux très larges dans les zones peu peuplées du centre et du nord et des faisceaux beaucoup plus fins dans les régions côtières du sud-ouest et du sud-est.

Dans un satellite adapté pour réaliser une couverture multifaisceaux, les faisceaux sont généralement générés par des systèmes d'antenne comprenant des antennes sources (ou simplement « sources » ; il s'agit généralement des cornets ou ensembles de cornets) et des réflecteurs. Typiquement, chaque antenne source génère un faisceau respectif, tandis qu'un même réflecteur peut contribuer à la génération de plusieurs faisceaux distincts. La taille d'un faisceau dépend à la fois des caractéristiques de l'antenne source et de celles du réflecteur ; en outre, un réflecteur est optimisé pour une source présentant certaines caractéristiques. En pratique, des sources différentes peuvent générer des faisceaux de taille légèrement différente à l'aide d'un même réflecteur, mais la désadaptation entre source et réflecteur devient rapidement problématique. Par conséquent, pour pouvoir générer une couverture multifaisceaux comprenant des faisceaux de tailles très différentes (rapport entre les surfaces des empreintes au sol pouvant atteindre, voire dépasser, un facteur 4) il est nécessaire d'utiliser plusieurs réflecteurs différents. Cela conduit à des systèmes antennaires complexes et coûteux.

Par ailleurs, les faisceaux de grandes dimensions présentent des pentes de diagramme d'émission beaucoup moins raides que les faisceaux plus directifs ; en d'autres termes, leur intensité décroit de manière plus progressive en s'éloignant du centre du faisceau. Par conséquent, les « queues » des faisceaux de grande taille tendent à interférer avec les plus petits faisceaux.

L'invention vise à remédier, en tout ou en partie, à au moins un des inconvénients précités de l'art antérieur. Plus particulièrement, l'invention vise à permettre la réalisation d'une couverture multifaisceaux au moyen d'un système antennaire plus simple et plus facilement industrialisable, et/ou à minimiser les interférences entre faisceaux. Certains modes de réalisation de l'invention permettent également d'obtenir une plus grande flexibilité dans la définition des faisceaux.

Un objet de l'invention, permettant d'atteindre ces buts, est donc un procédé de couverture multifaisceaux d'une région de la surface terrestre comportant :
- la génération, par une charge utile de télécommunications embarquée sur un satellite, d'une pluralité de faisceaux à radiofréquence, dits faisceaux élémentaires ;
- la formation d'une pluralité de faisceaux à radiofréquence, dits composites, présentant des empreintes au sol de tailles différentes, chaque dit faisceau composite étant obtenu par regroupement d'un ou plusieurs faisceaux élémentaires ; et
- l'émission ou la réception de données à travers lesdits faisceaux composites, des données identiques étant émises ou reçues à travers tous les faisceaux élémentaires formant un même faisceau composite ;
dans lequel au moins un dit faisceau composite est formé par regroupement d'une pluralité de faisceaux élémentaires de couleurs différentes, une couleur étant définie par une bande de fréquence et un état de polarisation.

Avantageusement au moins un dit faisceau composite est formé par regroupement d'une pluralité de faisceaux élémentaires présentant une même bande de fréquence et deux états de polarisation orthogonaux entre eux.

Avantageusement, au moins un dit faisceau composite est formé par regroupement d'une pluralité de faisceaux élémentaires dont les empreintes au sol sont adjacentes.

Avantageusement, une pluralité desdits faisceaux élémentaires présentent des empreintes au sol de taille sensiblement identique

Avantageusement, tous lesdits faisceaux élémentaires présentent des empreintes au sol de taille sensiblement identique

Avantageusement, les empreintes au sol desdits faisceaux composites présentent des tailles qui varient de manière progressive à travers ladite région de la surface terrestre.

Avantageusement, tous les faisceaux élémentaires formant un même faisceau composite sont générés en même temps.

En variante, tous les faisceaux élémentaires formant un même faisceau composite sont générés à tour de rôle.

L'invention se rapporte aussi à une charge utile de télécommunications par satellite pour la mise en oeuvre d'un procédé selon prédéfini, et comprenant :
- une pluralité d'antennes sources ;
- au moins un réflecteur agencé pour coopérer avec lesdites antennes sources de manière à générer un faisceau à radiofréquence, dit faisceau élémentaire, pour chaque dite antenne source ; et
- une pluralité de modules d'émission ou de réception configurés pour émettre ou recevoir des données respectives sous la forme de signaux à radiofréquence ;
chaque dite antenne source appartient à un groupement d'antennes sources, au moins certains desdits groupements comprenant une pluralité d'antennes sources ;
chaque dit module d'émission est relié à l'ensemble des antennes sources appartenant à un même groupement, de telle sorte que les faisceaux élémentaires générés par les antennes sources d'un même groupement forment un faisceau composite ; et
les antennes élémentaires d'au moins un dit groupement sont configurées pour générer des faisceaux élémentaires de couleurs différentes, une couleur étant définie par une bande de fréquence et un état de polarisation ;
lesdits groupements d'antennes sources étant configurés de telle sorte qu'une pluralité desdits faisceaux composites présentent des empreintes au sol de tailles différentes.

Avantageusement, les antennes élémentaires d'au moins un dit groupement sont configurées pour générer des faisceaux élémentaires présentant une même bande de fréquence et deux états de polarisation orthogonaux entre eux.

Avantageusement, les antennes élémentaires d'au moins un dit groupement sont configurées pour générer des faisceaux élémentaires dont les empreintes au sol sont adjacentes.

Avantageusement, lesdits groupements d'antennes sources sont configurés de telle sorte qu'une pluralité desdits faisceaux élémentaires présentent des empreintes au sol de taille sensiblement identique.

Avantageusement, lesdits groupements d'antennes sources sont configurés de telle sorte que tous lesdits faisceaux élémentaires présentent des empreintes au sol de taille sensiblement identique.

Avantageusement, au moins un dit module d'émission ou de réception est équipé d'un commutateur configuré pour relier ledit module aux antennes élémentaires correspondantes à tour de rôle.

D'autres caractéristiques, détails et avantages de l'invention ressortiront à la lecture de la description faite en référence aux dessins annexés donnés à titre d'exemple et qui représentent, respectivement :
- La figure 1, décrite plus haut, la couverture multifaisceaux d'une région présentant une densité d'utilisateur fortement variable ;
- les figures 2A et 2B, un mode de réalisation d'une couverture multifaisceaux ;
- la figure 3, une charge utile de télécommunications selon un mode de réalisation de l'invention.

Un principe à la base de l'invention consiste à couvrir la région d'intérêt avec des faisceaux fins de taille identique - ou tout au plus présentant un nombre réduit (par exemple 2 ou 3) de tailles différentes - qui peuvent être combinés entre eux, en particulier dans les zones de trafic moins dense, pour générer des faisceaux « composites » plus larges. Ainsi, les faisceaux de plus grandes dimensions ne sont pas générés par des réflecteurs dédiés ou par des sources désadaptées à la taille des réflecteurs, mais en combinant des faisceaux élémentaires fins. Cela présente plusieurs avantages par rapport à l'art antérieur :
- le système antennaire est beaucoup plus simple et modulaire, car il peut être constitué uniquement de sources identiques et d'un faible nombre de réflecteurs, également identiques entre eux ;
- les pentes des diagrammes restent raides même pour les faisceaux de plus grande taille, minimisant les interférences ;
- il y a une plus grande liberté dans le choix de la forme des faisceaux composites.

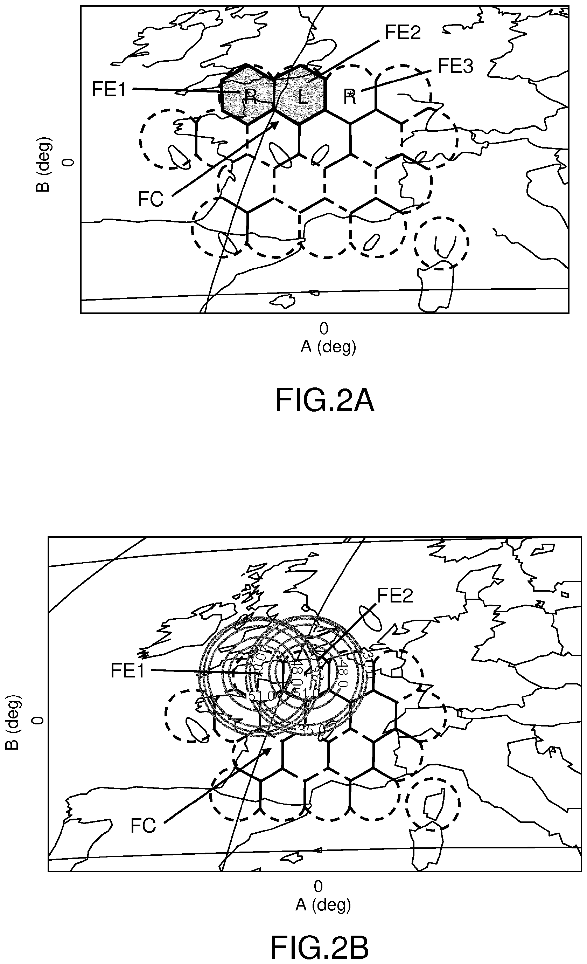

La figure 2A illustre une couverture multifaisceaux constituée de faisceaux élémentaires de taille identique. Les références FE1, FE2 et FE3 identifient trois de ces faisceaux élémentaires. De manière conventionnelle, pour éviter les interférences, des faisceaux élémentaires adjacents présentent des couleurs différentes. Dans le cas de la figure, plus précisément, les empreintes au sol des faisceaux élémentaires sont organisées par rangées. Des faisceaux élémentaires adjacents appartenant à une même rangée présentent une même bande de fréquence et des états de polarisation orthogonaux (une polarisation circulaire droite, « R » pour « Right » c'est à dire droite an anglais, pour FE1 et FE3 ; une polarisation circulaire gauche, « L » pour « Left » c'est à dire gauche en anglais, pour FE2). Des faisceaux élémentaires de rangées différentes présentent des bandes de fréquence disjointe.

Les faisceaux élémentaires FE1 et FE2 sont regroupés pour former un faisceau composite plus large FC, destiné à couvrir une zone présentant une densité de trafic relativement faible ; les mêmes données transitent donc par ces deux faisceaux élémentaires. Dans le cas de la figure, les faisceaux élémentaires FE1, FE2 appartiennent à la même rangée : ils présentent donc une même bande de fréquence et ne diffèrent que par leur polarisation. Dans ces conditions, ils peuvent être générés par des antennes sources reliées à un même amplificateur (amplificateur de puissance en émission, amplificateur à bas bruit en réception), les différents états de polarisation étant générés à l'intérieur de l'antenne.

Bien entendu, il est possible de réaliser des faisceaux composites associant plus que deux faisceaux élémentaires adjacents.

Le faisceau élémentaire FE3, par contre, est utilisé seul pour assurer la couverture à grande densité de trafic.

La figure 2B montre des courbes d'iso-intensité des faisceaux élémentaires FE1 et FE2. Grâce à la diversité de polarisation, ces faisceaux n'interfèrent pas bien qu'ils soient adjacents ; par conséquent, l'intensité du faisceau composite FC est donnée par la somme des intensités individuelles de ces faisceaux élémentaires. On comprend donc que la décroissance de l'intensité sur les bords de l'empreinte au sol du faisceau composite est aussi raide que dans le cas des faisceaux élémentaires pris isolément. Toutefois, pour diminuer ultérieurement les interférences entre faisceaux composites différents, il est préférable de ne pas juxtaposer des régions couvertes par des faisceaux composites de très grandes dimensions avec d'autres couvertes par des faisceaux beaucoup plus petits, mais d'exploiter la souplesse fournie par l'invention pour réaliser des couvertures dans lesquelles la taille des empreintes au sol des faisceau composites varie de manière graduelle sur la portion de surface terrestre concernée par la couverture.

Le faisceau composite a un angle solide multiple d'un nombre n de faisceaux élémentaires. Compte tenu du partage, la directivité est réduite d'un facteur 10.log(n) en dB. Lorsque n est trop élevé, la variation de directivité entre un faisceau élémentaire et un faisceau composite peut être importante et engendrer une variation du rapport signal C du faisceau composite proportionnel à n et donc une diminution du niveau de C/I, I étant les signaux interférents à la même fréquence et polarisation, provenant de faisceaux élémentaires non couplés.

Les faisceaux élémentaires adjacents à un gros faisceau composite peuvent ainsi potentiellement dégrader le rapport signal à bruit (C/I) du faisceau composite. Pour éviter la dégradation du rapport signal à bruit, il peut être avantageux de coupler un nombre limité de faisceaux élémentaires dans un faisceau composite, à proximité immédiate de faisceaux élémentaires extérieurs au faisceau composite. Par exemple, un faisceau composite composé de deux faisceaux élémentaires peut être adjacent à un - faisceau élémentaire. En faisant varier de manière progressive les tailles des empreintes au sol des faisceaux composites, les transitions abruptes de signal dans le rapport signal à bruit sont ainsi évitées.

Jusqu'à présent on a considéré uniquement le cas où des données transitent en même temps à travers tous les faisceaux élémentaires d'un même faisceau composite, ces faisceaux élémentaires se partageant les ressources de fréquence et de puissance attribuées au faisceau composite. En variante, il est possible d'activer à tour de rôle les différents faisceaux élémentaires d'un même faisceau composite, au moyen d'un commutateur disposé dans la charge utile du satellite. Ainsi, chaque faisceau élémentaire utilise - mais seulement pendant une fraction de temps - la totalité des ressources disponibles.

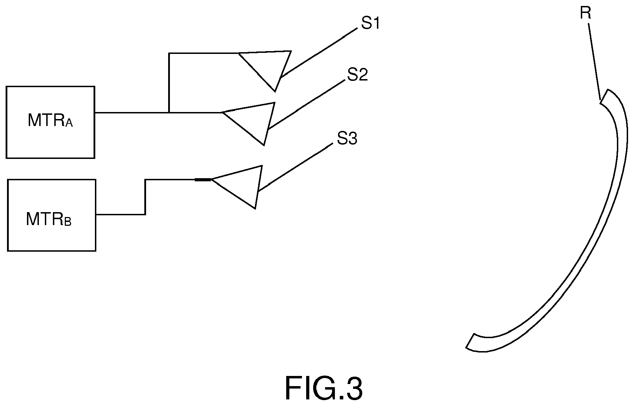

La figure 3 illustre, de manière très schématique, la structure d'une charge utile de télécommunications, embarquée sur un satellite, permettant la réalisation d'une couverture multifaisceaux telle que décrite plus haut. Une telle charge utile, donnée uniquement à titre d'exemple non limitatif, comprend :
- Deux modules de transmission ou réception - MTR_{A} et MTR_{B} pour générer les signaux devant être transmis par l'intermédiaire de faisceaux composites respectifs (en émission) ou pour acquérir les signaux reçus par ces faisceaux (en réception). Chaque module de transmission ou réception comprend au moins un amplificateur de puissance et/ou à bas bruit.
- Trois antennes sources S1 - S3 (cornets électromagnétiques) destinés à générer chacun un faisceau élémentaire respectif.
- Un réflecteur R coopérant avec les antennes sources pour générer lesdits faisceaux.

En réalité, un système antennaire selon l'invention comprend typiquement plusieurs réflecteurs et un nombre bien plus élevé d'antennes sources.

Le module MTR_{A} est relié à deux antennes sources S1, S2 pour réaliser une couverture du type des figures 2A, 2B. Bien que cela ne soit pas apparent sur la figure, les antennes sources S1 et S2 sont adaptées pour émettre (ou recevoir) selon des polarisations orthogonales.

Le module MTR_{B} est relié à une seule antenne source, S3, pour réaliser un faisceau « composite » fin, constitué par un seul faisceau élémentaire.

Dans le cas où un grand nombre de faisceaux fins adjacents doit être élaboré, un réseau comportant un grand nombre de sources élémentaires doit être réalisé. Les sources élémentaires peuvent alors être associées en plusieurs groupes selon une ou deux directions du plan focal du réflecteur ; on parle alors d'architecture MFB (Multiple Feed per Beam). Par rapport à une solution n'associant pas les sources élémentaires, une couverture identique peut être obtenue avec deux fois moins d'antennes, voire une seule, grâce à l'entrelacement des sources élémentaires. L'homme du métier peut trouver dans le document EP2688138 les informations nécessaires à la réutilisation des sources élémentaires dans une des deux dimensions du plan. Il peut également trouver dans le document EP2688142 les informations nécessaires à la réutilisation des sources élémentaires dans les deux dimensions du plan.

On remarque que le système antennaire de la charge utile représentée sur la figure 3 comprend uniquement des antennes sources identiques entre elles, coopérant avec un réflecteur unique (ou des réflecteurs identiques). Elle permet ainsi, en configuration multifaisceaux, d'avoir une diversité de tailles de faisceaux avec un réseau régulier initialement conçu pour ne former qu'une seule taille de faisceau. Il s'agit donc d'une structure plus simple et plus modulaire que celle d'une système antennaire multifaisceaux classique, comprenant des antennes sources et/ou des réflecteurs de tailles différentes.

## Revendications

1. **Procédé de couverture multifaisceaux d'une région de la surface terrestre** comportant :
- la génération, par une charge utile de télécommunications embarquée sur un satellite, d'une pluralité de faisceaux à radiofréquence, dits faisceaux élémentaires (FE1, FE2, FE3) ;
- la formation d'une pluralité de faisceaux à radiofréquence, dits composites (FC), présentant des empreintes au sol de tailles différentes, chaque dit faisceau composite étant obtenu par regroupement d'un ou plusieurs faisceaux élémentaires ; et
- l'émission ou la réception de données à travers lesdits faisceaux composites, des données identiques étant émises ou reçues à travers tous les faisceaux élémentaires formant un même faisceau composite ;
dans lequel au moins un dit faisceau composite est formé par regroupement d'une pluralité de faisceaux élémentaires de couleurs différentes, une couleur étant définie par une bande de fréquence et un état de polarisation.

2. Procédé selon la revendication 1 dans lequel au moins un dit faisceau composite est formé par regroupement d'une pluralité de faisceaux élémentaires présentant une même bande de fréquence et deux états de polarisation orthogonaux entre eux.

3. Procédé selon l'une des revendications précédentes dans lequel au moins un dit faisceau composite est formé par regroupement d'une pluralité de faisceaux élémentaires dont les empreintes au sol sont adjacentes.

4. Procédé selon l'une des revendications précédentes dans lequel une pluralité desdits faisceaux élémentaires présentent des empreintes au sol de taille sensiblement identique

5. Procédé selon la revendication 4 dans lequel tous lesdits faisceaux élémentaires présentent des empreintes au sol de taille sensiblement identique

6. Procédé selon l'une des revendications précédentes dans lequel les empreintes au sol desdits faisceaux composites présentent des tailles qui varient de manière progressive à travers ladite région de la surface terrestre.

7. Procédé selon l'une des revendications précédentes dans lequel tous les faisceaux élémentaires formant un même faisceau composite sont générés en même temps.

8. Procédé selon l'une des revendications 1 à 6 dans lequel tous les faisceaux élémentaires formant un même faisceau composite sont générés à tour de rôle.

9. **Charge utile de télécommunications par satellite** pour la mise en oeuvre d'un procédé selon l'une des revendications précédentes comprenant :
- une pluralité d'antennes sources (S1 - S3) ;
- au moins un réflecteur (R) agencé pour coopérer avec lesdites antennes sources de manière à générer un faisceau à radiofréquence, dit faisceau élémentaire, pour chaque dite antenne source ; et
- une pluralité de modules d'émission ou de réception (MTR_{A}, MTR_{B},) configurés pour émettre ou recevoir des données respectives sous la forme de signaux à radiofréquence ;
**caractérisé en ce que** :
- chaque dite antenne source appartient à un groupement d'antennes sources, au moins certains desdits groupements comprenant une pluralité d'antennes sources ; **en ce que**
- chaque dit module d'émission est relié à l'ensemble des antennes sources appartenant à un même groupement, de telle sorte que les faisceaux élémentaires générés par les antennes sources d'un même groupement forment un faisceau composite ; et **en ce que**
- les antennes élémentaires d'au moins un dit groupement sont configurées pour générer des faisceaux élémentaires de couleurs différentes, une couleur étant définie par une bande de fréquence et un état de polarisation ;
lesdits groupements d'antennes sources étant configurés de telle sorte qu'une pluralité desdits faisceaux composites présentent des empreintes au sol de tailles différentes.

10. Charge utile de télécommunications selon la revendication 9 dans laquelle les antennes élémentaires d'au moins un dit groupement sont configurées pour générer des faisceaux élémentaires présentant une même bande de fréquence et deux états de polarisation orthogonaux entre eux.

11. Charge utile de télécommunications selon l'une des revendications 9 ou 10 dans laquelle les antennes élémentaires d'au moins un dit groupement sont configurées pour générer des faisceaux élémentaires dont les empreintes au sol sont adjacentes.

12. Charge utile de télécommunications selon l'une des revendications 9 à 11 dans laquelle lesdits groupements d'antennes sources sont configurés de telle sorte qu'une pluralité desdits faisceaux élémentaires présentent des empreintes au sol de taille sensiblement identique.

13. Charge utile de télécommunications selon la revendication 12 dans laquelle lesdits groupements d'antennes sources sont configurés de telle sorte que tous lesdits faisceaux élémentaires présentent des empreintes au sol de taille sensiblement identique.

14. Charge utile de télécommunications selon l'une des revendications 9 à 13 dans laquelle au moins un dit module d'émission ou de réception est équipé d'un commutateur configuré pour relier ledit module aux antennes élémentaires correspondantes à tour de rôle.
